(19) Europäisches Patentamt
European Patent Office
Office européen des brevets

(11) EP 0 622 524 B1

(12) EUROPEAN PATENT SPECIFICATION

(45) Date of publication and mention
of the grant of the patent:
**18.06.1997 Bulletin 1997/25**

(51) Int Cl.6: **E21D 9/00**, E21D 9/06,
G01C 15/00, G01V 3/10,
E21B 47/022, G01B 7/00

(21) Application number: **92906701.5**

(22) Date of filing: **11.03.1992**

(86) International application number:
**PCT/JP92/00290**

(87) International publication number:
**WO 92/16720 (01.10.1992 Gazette 1992/25)**

(54) **SYSTEM FOR MEASURING EXCAVATION POSITION OF UNDERGROUND EXCAVATOR**

SYSTEM ZUR ERFASSUNG DER POSITION EINES UNTERIRDISCHEN GRABGERÄTS

SYSTEME POUR MESURER LA POSITION D'EXCAVATION D'UN EXCAVATEUR DU FOND

(84) Designated Contracting States:
**DE FR GB**

(30) Priority: **20.03.1991 JP 81587/91**

(43) Date of publication of application:
**02.11.1994 Bulletin 1994/44**

(73) Proprietor: **KABUSHIKI KAISHA KOMATSU
SEISAKUSHO
Minato-ku Tokyo 107 (JP)**

(72) Inventors:
• **YAMAGUCHI, Hiroaki
Hiratsuka-shi Kanagawa 254 (JP)**

• **OKAMOTO, Akira
Hiratsuka-shi Kanagawa 254 (JP)**

(74) Representative: **Meissner, Peter E., Dipl.-Ing.
Meissner & Meissner,
Patentanwaltsbüro,
Hohenzollerndamm 89
14199 Berlin (DE)**

(56) References cited:
JP-A- 1 172 701          JP-A- 3 260 281
JP-A- 3 260 283          JP-A-62 005 116
JP-A-62 095 480          US-A- 4 088 842

## Description

### Background of the Invention

This invention relates to a system for measuring an excavation position and, in particular, to a system for measuring a position of an underground excavator with high accuracy on the basis of an allowable error in displacement.

The present inventors have proposed various devices and methods for measuring excavation position of an underground excavator (See, e.g., Japanese Patent Laid-Open No. 245690/1990, Japanese Patent Laid-Open No. 87612/1991, Japanese Patent Application Nos. 58371-58384/1990 and 59201-59220/1991). Those disclosed therein are for measuring the excavation position of an underground excavator by using techniques applying magnetic fields or radar.

Considering the outline of a method using magnetic fields, at least one magnetic field generating device is provided outside the underground excavator. For example, the magnetic field generating device(s) may be provided within a vertical shaft ahead of the underground excavator, in front of the underground excavator opposed thereto, or on a plane along an excavation plan line. A magnetic field detecting device is provided in the underground excavator to detect strength of the magnetic field generated by the magnetic field generating device. The relative position between the magnetic field generating device and the magnetic field detecting device is measured according to the strength of the detected magnetic field.

The magnetic field generating device is located at a known position relative to the excavation plan line while the magnetic field detecting device is also located at a known position in the underground excavator. Accordingly, the excavation position of the underground excavator can be measured by means of measuring the relative position of these devices.

The above mentioned conventional art is basically for measuring an actual excavation position relative to the excavation plan line, i.e., an absolute value of the displacement, which results in a value with high accuracy to some extent. However, this method is disadvantageous in that the magnitude of errors is unknown.

The errors can be divided into equipment errors and fluctuation errors. It is possible to overcome a problem of the equipment errors by means of improving performance of the equipment used. However, the fluctuation errors are difficult to be removed because it depends on various external factors. More particularly, the fluctuation error may be caused as a result of permeability change related to divergent underground materials. It may also be caused due to, when the magnetic field generating device is arranged on the ground, fluctuation of the magnetic field for which the irregularity of the ground surface and buildings standing thereon are usually responsible.

### Summary of the Invention

With respect to the above mentioned problems, the present invention is directed to provide a system for measuring excavation position capable of measuring the position of an underground excavator with high accuracy positively applying the fluctuation error which is difficult to be removed.

For this purpose, a system for measuring excavation position of an underground excavator according to the present invention comprises a plurality of magnetic field generating devices provided at a known position outside the underground excavator, a magnetic field detecting device provided in the underground excavator and a microcomputer connected to these devices. The microcomputer activates these devices in accordance with an allowable error in displacement previously designated and supplied to the microcomputer by an operator to produce the excavation position of the underground excavator over the range of the allowable error. The allowable error is determined depending on a pitch of arrangement between adjacent two of a plurality of magnetic field generating devices. Accordingly, an operator is allowed to previously select the magnetic field generating device while the microcomputer is notified directly of data about the device designated by the operator, considering a case where the operator requires to measure a position using the pitch precisely between these magnetic field generating devices.

Alternatively, an allowable error in displacement previously selected by the operator may be supplied directly to the microcomputer, considering a case where the operator requires to measure a position using a representative pitch between these magnetic field generating devices. In such a case, the microcomputer compares the allowable error received with all pitches between adjacent two magnetic field generating devices to select the magnetic field generating devices where the pitch between them corresponds to this allowable error. The microcomputer stores data relating to which magnetic field generating devices are selected.

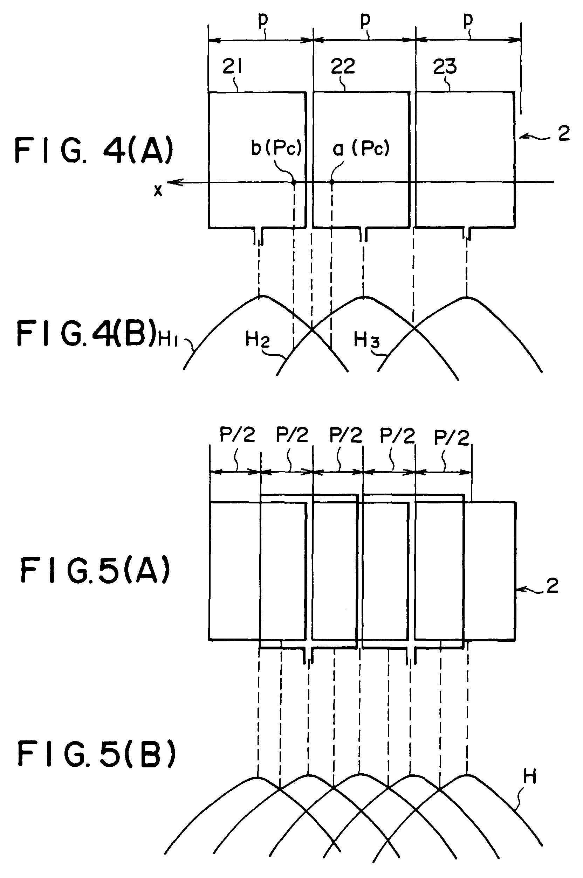

Fig. 4 (A) is a view showing three loop coils 21, 22 and 23 arranged closely at equivalent pitches p as a magnetic field generating device 2. Fig. 4 (B) is a view showing detected magnetic field strength H1, H2 and H3 obtained by means of moving a cross coil which is not shown in an x direction to successively scan relative to the loop coils 21, 22 and 23 successively activated.

In practice, the cross coil is fixedly disposed at a predetermined position in an underground excavator. Let projecting points of this fixedly disposed position be points a and b in the figure, the detected magnetic field strength for the point a can be represented by:

$$H2 > H1 \gg H3,$$

while for the point b it is given by:

H1 > H2 >> H3.

A change point of large/small relation of the detected magnetic field strength corresponds to the position shifted from the center of each loop coil to right and left by half a pitch, i.e., half of p or p/2 as apparent from Figs. 4(A) and (B). That is, the position Pc of the cross coil can be represented by:

$$Pc = Px \pm p/2,$$

that lies within $\pm$ p/2 of the position Px of the loop coil 22 having the maximum detected magnetic field strength.

Next, as shown in Figs. 5(A) and (B), when five loop coils are overlapped with each other by half of the pitch p, p/2, the position Pc of the cross coil can be represented by:

$$Pc = Px \pm p/2 \times 1/2 = \pm p/4,$$

that lies within $\pm$ p/4 of the position Px of the loop coil 2x having the maximum detected magnetic field strength.

As mentioned above, to select and designate loop coils arranged at the larger pitch allows measurement of position with an increased error while selection and designation of loop coils arranged at the smaller pitch allow measurement of position with a reduced error. With this respect, it is possible to know gradually the position Pc of the cross coil, i.e., the excavation position of an underground excavator as a position with allowable error range by means of arranging many loop coils at the smallest pitches as possible, selecting and designating these loop coils gradually. In addition, the loop coils is not limited to be arranged at the equivalent pitches as long as the value of the pitch can be readily calculated by the microcomputer. The pitches may be determined randomly.

Brief Description of the Drawing

Fig. 1 is a view showing an entire arrangement of the present invention;
Fig. 2 is a flow chart of an operation carried out by a microcomputer according to a first embodiment of the present invention;
Fig. 3 is a flow chart of an operation carried out by a microcomputer according to a second embodiment of the present invention;
Figs. 4(A) and 4(B) are views for use in describing an allowable error applied to the present invention, in which magnetic field generating devices are arranged in large pitches;
Figs. 5(A) and 5(B) are views for use in describing an allowable error applied to the present invention, in which magnetic field generating devices are arranged in small pitches;
Fig. 6 is a view showing arrangement of magnetic field generating devices in a third embodiment;
Fig. 7 is a view showing arrangement of magnetic field generating devices in a fourth embodiment; and
Fig. 8 is a view showing arrangement of magnetic field generating devices in a fifth embodiment.

Description of the Preferred Embodiment

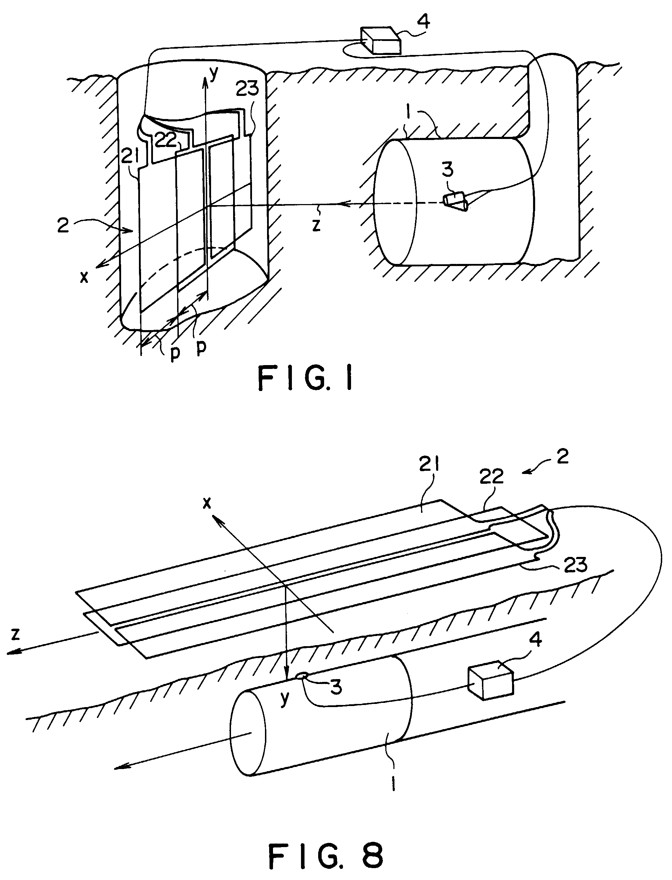

An embodiment of the present invention is now described in detail with reference to Figs. 1 through 3 and Figs. 6 through 8.

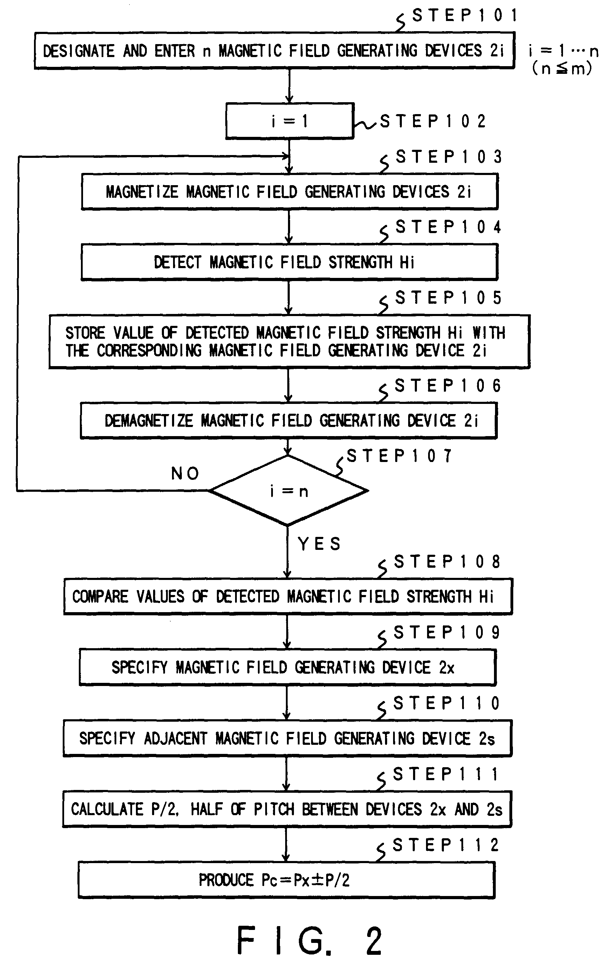

Fig. 1 is a view showing an entire arrangement of the present invention and Fig. 2 is a flow chart of an operation carried out by a microcomputer according to a first embodiment of the present invention. In Fig. 1, three loop coils 21, 22 and 23 are provided each of which serves as a magnetic field generating device 2 at a known position outside an underground excavator 1. The loop coils are partially overlapped with each other at equivalent pitches p. The underground excavator 1 is provided with a cross coil which serves as a magnetic field detecting device 3. In addition, a microcomputer 4 is connected to each of the loop coils 21, 22 and 23 and the magnetic field detecting device 3. The microcomputer 4 stores a central position of the respective loop coils 21, 22 and 23 and produces the position of the underground excavator 1, carrying out the flow chart shown in Fig. 2 now described.

First, at step 101, n magnetic field generating devices 2i (the loop coils 21, 22 and 23 in Fig. 1) designated out of m magnetic field generating devices, where m is larger in number than n. The microcomputer is supplied with data concerning which devices are designated. A magnetic field strength Hi generated is detected at every activation by using the cross coil, and data representing a value of the detected magnetic field strength Hi is stored at every detection. In this event, the microcomputer 4 stores data about the magnetic field strength together with that about the corresponding magnetic field generating device 2i (steps 102 ~ 107). In other words, the magnetic field generating device and the strength of the magnetic field generated thereby are stored as a pair. Next, the microcomputer 4 compares the values of the detected magnetic field strength Hi with each other(step 108) and specifies a magnetic field detecting device 2x where the maximum magnetic field strength Hx is detected (step 109). Subsequently, the microcomputer 4 specifies a magnetic field generating device 2s adjacent to the magnetic field generating device 2x (step 110) and reads known positions Px and Ps of these magnetic field generating devices 2x and 2s, respectively, to calculate the half of the pitch between them, i.e., p/2 (step 111). A position Pc of the magnetic field detecting device 3 is then produced as:

$$Pc = Px \pm p/2$$

in accordance with the position Px of the magnetic field generating device 2 and the half of the pitch, p/2 (step 112).

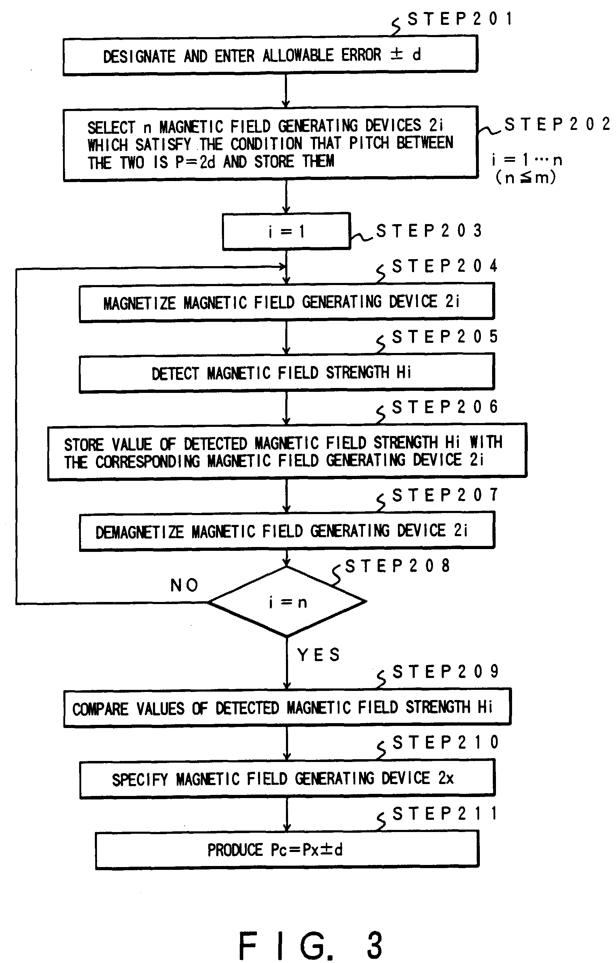

Next, a second embodiment of the present invention is described with reference to Fig. 1 showing the entire arrangement of the invention as well as Fig. 3 showing a flow chart of an operation carried out by the microcomputer. In Fig. 1, a difference from said first embodiment is that the microcomputer 4 is provided with and stores previously the pitches p between the positions of the adjacent pair among the loop coils 21, 22 and 23. The microcomputer 4 in this event produces data representing the position of the underground excavator 1, carrying out the flow chart shown in Fig. 3 now described.

First, the microcomputer 4 selects, for an allowable error in displacement ±d that an operator adequately selects designates and supplies to the microcomputer 4 at step 201, n magnetic field generating devices 2i from m ones that satisfy pitch p = 2 × d to store information which devices are selected (step 202). Successively, the microcomputer 4 activates each magnetic field generating device 2i and detects each magnetic field strength Hi at every activation by using the magnetic field detecting device 3. The value of each detected magnetic field strength Hi is stored at every detection together with the corresponding magnetic field generating device 2i (steps 203 ～ 208). The microcomputer 4 then compares the values of the detected magnetic field strength Hi with each other(step 209) and specifies the magnetic field detecting device 2x where the maximum magnetic field strength Hx is detected (step 210). The position Pc of the magnetic field detecting device 3 is then produced as:

$$Pc = Px \pm d$$

in accordance with the position Px of the magnetic field generating device 2x and said allowable error previously designated and supplied to the microcomputer (step 211).

Further, other embodiments are described.

The number of the loop coils acting as the magnetic field generating device 2 is not limited to three as in the case shown in Fig. 1. Likewise, the measurement is not limited to be made in a transversal direction (x direction). For example, the loop coils may be provided crosswise: five coils are arranged vertically and other five horizontally. In this event, the number of coils to be arranged and the orientation thereof can be adequately determined depending on the conditions.

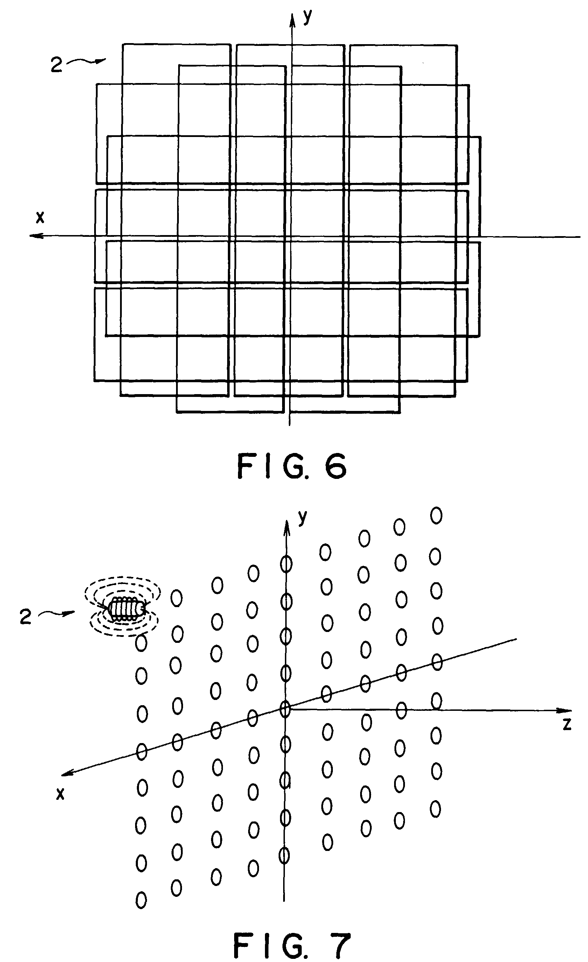

In addition, the magnetic field generating device 2 is not limited to the loop coils shown in Fig. 1. For example, a plurality of solenoids can be arranged crosswise as in the fourth embodiment shown in Fig. 7. In this event, anything can be used as the magnetic field generating device 2 as long as magnetization and demagnetization can be controlled. For biasing or for magnetic shunt, the magnetic field generating device 2 may be structured with a permanent magnet disposed against an induction magnet.

While the magnetic field generating device 2 according to the above mentioned third embodiment shown in Fig. 6 and to the fourth embodiment shown in Fig. 7 has thus been described to be arranged suitably in front of the underground excavator 1 or in front of a construction within a vertical shaft, the magnetic field generating device 2 may be arranged along an excavation direction plan line z on the ground parallel to an excavation direction of the underground excavator as in the fifth embodiment shown in Fig. 8.

Further, the magnetic field detecting device 3 is not limited to the cross coil as in the above mentioned embodiment, instead, as a case may be, applicable are a single coil, plural coils or so-called magneto-electric converting element or the like such as an MR element or a Hall element.

Additionally, prior arts and the above mentioned embodiments can be used in cooperation with each other. For example, when the number of the magnetic field detecting devices 2 is small and the pitch is large as well as when measurement with higher accuracy is required, the range of error is measured first in accordance with the above mentioned embodiment to obtain an absolute position with a conventional technique. To designate and enter a large allowable error results in production of a position represented by a rough value while to designate and enter a small allowable error results in production of a position represented by a precise value. Some excavation methods can be used with a rough measurement accuracy, so that it is applicable to such a case.

As mentioned above, according to the present invention, it is possible to measure a position together with an allowable error for measuring a position of the underground excavator 1 using the allowable error positively. In other words, it becomes possible to estimate the absolute position of the underground excavator 1 within a range where the measured error coincides with the allowable error. Though this allowable error is restricted depending on the arrangement pitch of the magnetic field generating device 2, it is extremely easy to manufacture while considering previously an arrangement of the magnetic field generating device 2. Effects are given for each embodiment.

According to the first embodiment, it is possible to designate and supply directly the magnetic field generating device 2 selected by an operator to the microcomputer 4 and thus it is possible to readily measure the position within the allowable error range only by means of bringing an arrangement plan of the magnetic field generating device with the pitch put therein.

According to the second embodiment, it is possible to designate and supply directly the allowable error selected by an operator to the microcomputer 4 and thus it is possible to readily measure the position within the allowable error range only by means of reminding briefly the pitch of the magnetic field generating device 2.

In the third through fifth embodiments, effects equivalent to those in the above mentioned embodiments can be obtained.

Industrial Applicability

The present invention is useful as a system for measuring excavation position that measures the position of an underground excavator with high accuracy on the basis of an allowable error in displacement.

**Claims**

1. A system for measuring the excavation position of an underground excavator, comprising a plurality of magnetic field generating devices provided at known positions outside the underground excavator, a magnetic field detecting device provided in the underground excavator and a microcomputer connected to these devices to store each known position, characterized in that for each magnetic field generating device adequately selected by an operator from a plurality of magnetic field generating devices, and designated and entered to the microcomputer, said microcomputer is adapted to:

   (1) successively activate these respective magnetic field generating devices, detect each magnetic field strength Hi for every activation by using the magnetic field detecting device, and store each detected magnetic field strength Hi for every detection being corresponded to each magnetic field generating device;
   (2) specify, by comparison, the magnetic field detecting device where the maximum magnetic field strength is detected;
   (3) as well as specify the magnetic field generating device adjacent to this magnetic field generating device;
   (4) calculate, according to a known position Px of the magnetic field generating device from which the maximum magnetic field strength is detected and a known position Pc of the magnetic field generating device adjacent thereto, the half of the pitch between them, p/2; and
   (5) produce a position Pc of the magnetic field detecting device as Pc = Px ± p/2.

2. A system for measuring the excavation position of an underground excavator, comprising a plurality of magnetic field generating devices provided at known positions outside of the underground excavator, a magnetic field detecting device provided in the underground excavator and a microcomputer connected to these devices to store each known position and all pitches p between these positions, characterized in that, for an allowable error of displacement ±d adequately selected, designated and entered to the microcomputer by an operatore, said microcomputer is adapted to:

   (1) select and store each magnetic field generating device that satisfies the relationship pitch p = 2 × d;
   (2) successively activate these respective magnetic field generating devices, detect each magnetic field strength Hi for every activation by using the magnetic field detecting device, and store each detected magnetic field strength Hi for every detection being corresponded to each magnetic field generating device;
   (3) specify, by comparison, the magnetic field detecting device where the maximum magnetic field strength is detected; and
   (4) produce the position Pc of the magnetic field detecting device as Pc = Px ± d in accordance with the position Px of this magnetic field generating device 2x and said allowable error ±d designated and entered.

3. A system for measuring excavation position of an underground excavator as claimed in Claim 1 or 2 characterized in that said magnetic field generating device comprises a plurality of loop coils overlapped in at least one of vertical and horizontal direction.

4. A system for measuring excavation position of an underground excavator as claimed in Claim 1 or 2 characterized in that said magnetic field generating device comprises a plurality of solenoids overlapped in at least one of vertical and horizontal direction.

5. A system for measuring excavation position of an underground excavator as claimed in Claim 1 or 2 characterized in that said magnetic field generating device is disposed along an excavation direction plan line on the ground parallel to an excavation direction of said underground excavator.

6. A system for measuring excavation position of an underground excavator as claimed in Claim 1 or 2 characterized in that said magnetic field detecting device is one or more cross-coil(s) or magneto-electric converting element(s).

## Patentansprüche

1. System zum Messen der Abbauposition einer Auffahrmaschine, bestehend aus einer Anzahl von außerhalb der Auffahrmaschine an bekannten Positionen angeordneten Magnetfelderzeugungseinrichtungen, einer in der Auffahrmaschine angeordneten Magnetfeldmeßeinrichtung und einem an diese Einrichtungen angeschlossenen Mikrocomputer zum Speichern einer jeden bekannten Position, dadurch gekennzeichnet, daß der Mikrocomputer für folgende Aufgaben im Hinblick auf eine jede durch einen Bediener aus einer Anzahl von Magnetfelderzeugungseinrichtungen entsprechend ausgewählte, bestimmte und dem Mikrocomputer eingegebene Magnetfelderzeugungseinrichtung programmiert ist:

(1) schrittweises Erregen dieser Magnetfelderzeugungseinrichtungen, Messen einer jeden entsprechenden Magnetfeldstärke Hi bei jeder Erregung mit Hilfe der Magneffeldmeßeinrichtung und Speichern einer jeden für die jeweilige Magnetfelderzeugungseinrichtung gemessenen Magnetfeldstärke Hi nach jeder Messung;
(2) Ermitteln der Magnetfeldmeßeinrichtung, bei der die größte Magneffeldstärke gemessen wurde, durch Vergleich;
(3) sowie Ermitteln der dieser Magneffelderzeugungseinrichtung benachbarten Magnetfelderzeugungseinrichtung;
(4) Berechnen der Hälfte des Abstandswerts zwischen der Magnetfelderzeugungseinrichtung, bei der die größte Magnetfeldstärke gemessen wurde, und der ihr benachbarten Magnetfelderzeugungseinrichtung, d.h. von p/2, anhand einer bekannten Position Px der Magnetfelderzeugungseinrichtung mit der größten Magneffeldstärke sowie einer bekannten Position Pc der ihr benachbarten Magnetfelderzeugungseinrichtung und
(5) Berechnen einer Position Pc der Magnetfeldmeßeinrichtungen in der folgenden Form:

$$Pc = Px \pm p/2.$$

2. System zum Messen der Abbauposition einer Auffahrmaschine, bestehend aus einer Anzahl von außerhalb der Auffahrmaschine an bekannten Positionen angeordneten Magnetfelderzeugungseinrichtungen, einer in der Auffahrmaschine angeordneten Magnetfeldmeßeinrichtung und einem an diese Einrichtungen angeschlossenen Mikrocomputer zum Speichern einer jeden bekannten Position und aller Abstandswerte p zwischen diesen Positionen, dadurch gekennzeichnet, daß der Mikrocomputer für folgende Aufgaben im Hinblick auf einen vom Bediener entsprechend ausgewählten, bestimmten und dem Mikrocomputer eingegebenen zulässigen Fehler in bezug auf den Versatz ±d programmiert ist:

(1) Auswählen und Speichern einer jeden Magnetfelderzeugungseinrichtung, die dem Verhältnis
Abstandswert p = 2 x d entspricht;
(2) schrittweises Erregen dieser entsprechenden Magneffelderzeugungseinrichtungen, Messen einer jeden Magneffeldstärke Hi mit Hilfe der Magnetfeldmeßeinrichtung bei jeder Erregung und Speichern einer jeden jeder Magnetfelderzeugungseinrichtung zuzuordnenden gemessenen Magneffeldstärke Hi nach dem Messen;
(3) Ermitteln der Magnetfeldmeßeinrichtung, bei der die größte Magneffeldstärke gemessen wurde, durch Vergleich und
(4) Berechnen der Position Pc der Magneffeldmeßeinrichtung nach der Formel Pc = Px ± d anhand der Position Px dieser Magneffelderzeugungseinrichtung 2x und des bestimmten und eingegebenen zulässigen Fehlers ± d.

3. System zum Messen der Abbauposition einer Auffahrmaschine nach Anspruch 1 oder 2, dadurch gekennzeichnet, daß zu der Magnetfelderzeugungseinrichtung eine Anzahl von Leiterschleifen gehört, die einander zumindest in einer Richtung, senkrecht oder waagerecht, überlagern.

4. System zum Messen der Abbauposition einer Auffahrmaschine nach Anspruch 1 oder 2, dadurch gekennzeichnet, daß zu der Magnetfelderzeugungseinrichtung eine Anzahl von Solenoiden gehört, die einander zumindest in einer Richtung, senkrecht oder waagerecht, überlagern.

5. System zum Messen der Position einer Auffahrmaschine nach Anspruch 1 oder 2, dadurch gekennzeichnet, daß die Magnetfelderzeugungseinrichtung entlang einer Abbaulinie auf dem Boden parallel zur Abbaurichtung der Auffahrmaschine angeordnet ist.

6. System zum Messen der Abbauposition einer Auffahrmaschine nach Anspruch 1 oder 2, dadurch gekennzeichnet, daß es sich bei der Magnetfeldmeßeinrichtung um eine oder mehrere Kreuzspulen oder ein oder mehrere Drehspulelemente handelt.

## Revendications

1. Système pour mesurer la position d'abattage d'un engin de creusement, comprenant un certain nombre de générateurs de champ magnétique, disposés, à des positions connues, en dehors de l'engin de creusement, un dispositif à mesurer le champ magnétique disposé au niveau de l'engin de creusement et un micro-ordinateur relié audit matériel pour enregistrer chacune des positions connues, caractérisé en ce que le micro-ordinateur est programmé, en ce qui concerne chacun d'une multitude de générateurs de champ magnétique choisie, déterminée et entrée au micro-ordinateur par l'opérateur, de manière à réaliser les fonctions suivantes :

(1) exciter pas à pas lesdits générateurs de champ magnétique, pour chacune des excitations réalisées mesurer par l'intermédiaire du dispositif à mesurer le champ magnétique chacune des intensités de champ magnétique Hi et, après chaque mesure, enregistrer chacune des intensités de champ magnétique Hi mesurées pour le générateur de champ magnétique respectif;
(2) par comparaison, déterminer le dispositif à mesurer le champ magnétique dont l'intensité de champ magnétique mesurée est la plus élevée; ainsi que
(3) déterminer le générateur de champ magnétique voisin dudit générateur de champ magnétique;
(4) à partir d'une position Px connue du générateur de champ magnétique dont l'intensité de champ magnétique est la plus élevée et d'une position Pc connue de son générateur de champ magnétique voisin, calculer le demi-pas entre le générateur de champ magnétique dont l'intensité de champ magnétique mesurée est la plus élevée, et le générateur de champ magnétique voisin, donc p/2; et
(5) calculer une position Pc des dispositifs à mesurer le champ magnétique de la manière suivante :

$$Pc = Px \pm p/2.$$

2. Système pour mesurer la position d'abattage d'un engin de creusement, comprenant un certain nombre de générateurs de champ magnétique disposés, à des positions connues, en dehors de l'engin de creusement, un dispositif à mesurer le champ magnétique, situé au niveau de l'engin de creusement et un micro-ordinateur relié audit matériel pour enregistrer chacune des positions connues et toutes les valeurs de pas p mesurées entre lesdites positions, caractérisé en ce que le micro-ordinateur est programmé, en ce qui concerne l'erreur de déplacement admissible ± d choisie, déterminée et entrée au micro-ordinateur par l'opérateur, de manière à réaliser les fonctions suivantes :

(1) choisir et enregistrer chacun des générateurs de champ magnétique respectant le rapport de pas p = 2 x d;
(2) exciter pas à pas lesdits générateurs de champ magnétique, à chaque excitation mesurer à l'aide du dispositif à mesurer le champ magnétique chacune des intensités de champ magnétique Hi et, après la mesure, enregistrer chacune des intensités de champ magnétique Hi mesurées pour chacun des générateurs de champ magnétique;
(3) déterminer, par comparaison, le dispositif à mesurer le champ magnétique dont l'intensité de champ magnétique mesurée est la plus élevée; et
(4) à partir de la position Px dudit générateur de champ magnétique 2x et de l'erreur admissible ± d déterminée et entrée au micro-ordinateur, calculer la position Pc du dispositif à mesurer le champ magnétique d'après la relation Pc = Px ± d.

3. Système pour mesurer la position d'abattage d'un engin de creusement selon les revendications 1 ou 2,
caractérisé en ce que le générateur de champ magnétique comprend un certain nombre de boucles conductrices superposées dans une direction au moins, verticale ou horizontale.

4. Système pour mesurer la position d'abattage d'un engin de creusement selon les revendications 1 ou 2,
caractérisé en ce que le générateur de champ magnétique comporte un certain nombre de solénoïdes superposés dans une direction au moins, verticale ou horizontale.

5. Système pour mesurer la position d'abattage d'un engin de creusement selon les revendications 1 ou 2,
caractérisé en ce que le générateur de champ magnétique est disposé au sol le long d'une ligne d'abattage parallèle à la direction d'abattage de l'engin de creusement.

6. Système pour mesurer la position d'abattage d'un engin de creusement selon les revendications 1 ou 2,
caractérisé en ce que le dispositif à mesurer le champ magnétique est constitué d'un ou plusieurs cadres croisés ou d'un ou plusieurs éléments à cadre mobile.

FIG. 1

FIG. 8

EP 0 622 524 B1

STEP 101

DESIGNATE AND ENTER n MAGNETIC FIELD GENERATING DEVICES 2i | i = 1 ··· n
$(n \leq m)$

i = 1 — STEP 102

STEP 103

MAGNETIZE MAGNETIC FIELD GENERATING DEVICES 2i

STEP 104

DETECT MAGNETIC FIELD STRENGTH Hi

STEP 105

STORE VALUE OF DETECTED MAGNETIC FIELD STRENGTH Hi WITH
THE CORRESPONDING MAGNETIC FIELD GENERATING DEVICE 2i

STEP 106

DEMAGNETIZE MAGNETIC FIELD GENERATING DEVICE 2i

STEP 107

NO ◇ i = n

YES

STEP 108

COMPARE VALUES OF DETECTED MAGNETIC FIELD STRENGTH Hi

STEP 109

SPECIFY MAGNETIC FIELD GENERATING DEVICE 2x

STEP 110

SPECIFY ADJACENT MAGNETIC FIELD GENERATING DEVICE 2s

STEP 111

CALCULATE P/2, HALF OF PITCH BETWEEN DEVICES 2x AND 2s

STEP 112

PRODUCE $Pc = Px \pm P/2$

# F I G.  2

9

STEP201

DESIGNATE AND ENTER ALLOWABLE ERROR ± d

SELECT n MAGNETIC FIELD GENERATING DEVICES 2i
WHICH SATISFY THE CONDITION THAT PITCH BETWEEN
THE TWO IS P=2d AND STORE THEM

STEP202

$i = 1 \cdots n$
$(n \leqq m)$

$i = 1$ — STEP203

STEP204

MAGNETIZE MAGNETIC FIELD GENERATING DEVICE 2i

STEP205

DETECT MAGNETIC FIELD STRENGTH Hi

STEP206

STORE VALUE OF DETECTED MAGNETIC FIELD STRENGTH Hi WITH
THE CORRESPONDING MAGNETIC FIELD GENERATING DEVICE 2i

STEP207

DEMAGNETIZE MAGNETIC FIELD GENERATING DEVICE 2i

STEP208

NO          $i = n$

YES

STEP209

COMPARE VALUES OF DETECTED MAGNETIC FIELD STRENGTH Hi

STEP210

SPECIFY MAGNETIC FIELD GENERATING DEVICE 2x

STEP211

PRODUCE Pc=Px±d

F I G.  3

FIG. 4(A)

FIG.4(B)

FIG.5(A)

FIG.5(B)

FIG. 6

FIG. 7